# EUROPEAN PATENT APPLICATION

(11) **EP 4 750 165 A1**
(43) Date of publication of application: **27.05.2026**
(21) Application number: 23945403.6
(22) Date of filing: 17.07.2023
(51) Int. Cl.: H04W 52/02

(54) **COMMUNICATION METHOD, AP DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2023/107786
(87) International publication number: WO 2025/015508

(57) **Abstract**

Embodiments of the present disclosure relate to the field of communications, and provide a communication method, an AP device, and a storage medium. The method comprises: a first AP device determines first parameter information, wherein the first parameter information is used by the first AP device to determine whether to adjust first R-TWT information, wherein the first R-TWT information is scheduled by the first AP device. Embodiments of the present disclosure can provide a method for determining parameter information used for determining whether to adjust R-TWT information.

## Description

### FIELD

The present disclosure relates to the field of communication technologies, and in particular, to a communication method, an access point (AP) and a storage medium.

### BACKGROUND

Target Wake Time (TWT) is used for a station (STA) device and an access point (AP) to communicate within a specific service period through negotiation and remain dormant at other times to save device energy consumption. In order to ensure communication of low-latency services, 802.11be proposes a Restricted Target Wake Time (R-TWT) protocol, where within the R-TWT service period (SP), only communications identified as low-latency services are allowed, and other communication services are suspended or postponed within this phase.

Currently, the R-TWT mechanism will be further studied to ensure that low-latency service communication is free from interference.

### SUMMARY

Embodiments of the present disclosure provide a communication method, an AP, and a storage medium, which can provide a method for providing parameter information used to determine whether to adjust R-TWT information.

In a first aspect, an embodiment of the present disclosure provides a communication method. The method includes:
a first AP determining first parameter information; where the first parameter information is used by the first AP to determine whether to adjust first R-TWT information;
where the first R-TWT information is scheduled by the first AP.

In a second aspect, an embodiment of the present disclosure provides a communication method. The method includes:
a second AP sending a first frame, where the first frame carries first parameter information, and the first parameter information is used by a first AP to determine whether to adjust first R-TWT information;
where the first R-TWT information is scheduled by the first AP;
where the first parameter information includes second R-TWT information and one or more pieces of third R-TWT information, the second R-TWT information is scheduled by the second AP, and the one or more pieces of third R-TWT information are respectively scheduled by APs other than the second AP.

In a third aspect, an embodiment of the present disclosure provides a communication method. The method includes:
a third AP sending a second frame, where the second frame carries first parameter information, and the first parameter information is used by a first AP to determine whether to adjust first R-TWT information;
where the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by the third AP.

In a fourth aspect, an embodiment of the present disclosure provides an AP. The AP includes:
a processing module, configured to determine first parameter information; where the first parameter information is used by a first AP to determine whether to adjust first R-TWT information;
where the first R-TWT information is scheduled by the first AP.

In a fifth aspect, an embodiment of the present disclosure provides an AP. The AP includes:
a transceiving module, configured to send a first frame, where the first frame carries first parameter information, and the first parameter information is used by a first AP to determine whether to adjust first R-TWT information;
where the first R-TWT information is scheduled by the first AP;
where the first parameter information includes second R-TWT information and one or more pieces of third R-TWT information, the second R-TWT information is scheduled by a second AP, and the one or more pieces of third R-TWT information are respectively scheduled by APs other than the second AP.

In a sixth aspect, an embodiment of the present disclosure provides an AP. The AP includes:
a transceiving module, configured to send a second frame, where the second frame carries first parameter information, and the first parameter information is used by a first AP to determine whether to adjust first R-TWT information;
where the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by a third AP.

In a seventh aspect, an embodiment of the present disclosure provides an AP. The AP includes one or more processors;
where the AP is configured to perform the communication method provided in the first aspect, the second aspect, or the third aspect of the embodiments of the present disclosure.

In an eighth aspect, an embodiment of the present disclosure provides a storage medium. The storage medium stores instructions, where when the instructions run on a communication device, the communication device is caused to perform the communication method provided in the first aspect, the second aspect, or the third aspect of the embodiments of the present disclosure.

In a ninth aspect, an embodiment of the present disclosure provides a communication system. The communication system includes a first AP, a second AP, and a third AP; where the first AP is configured to perform the method described in the first aspect, the second AP is configured to perform the method described in the second aspect, and the third AP is configured to perform the method described in the third aspect.

Based on the communication method, the AP, and the storage medium provided by the embodiments of the present disclosure, the first AP can determine first parameter information used to determine whether to adjust the R-TWT information of the first AP.

Additional aspects and advantages of the embodiments of the present disclosure will be given in part in the following description, which will become apparent from the following description or be understood through the practice of the present disclosure.

### BRIEF DESCRIPTION OF THE DRAWINGS

In order to illustrate the technical solutions of the embodiments of the present disclosure more clearly, the drawings used in the description of the embodiments will be briefly introduced below. Obviously, the drawings in the following description are only some embodiments of the present disclosure. For those of ordinary skill in the art, other drawings can also be obtained from these drawings without creative effort.
FIG. 1 is a schematic architectural diagram of a communication system according to an embodiment of the present disclosure;
FIG. 2 is a schematic diagram of a network architecture according to an embodiment of the present disclosure;
FIG. 3 is a first schematic interaction diagram of a communication method according to an embodiment of the present disclosure;
FIG. 4 is a second schematic interaction diagram of a communication method according to an embodiment of the present disclosure;
FIG. 5 is a schematic flowchart of a communication method performed by a first AP according to an embodiment of the present disclosure;
FIG. 6 is a schematic flowchart of a communication method performed by a second AP according to an embodiment of the present disclosure;
FIG. 7 is a schematic flowchart of a communication method performed by a third AP according to an embodiment of the present disclosure;
FIG. 8a is a first structural schematic diagram of an AP according to an embodiment of the present disclosure;
FIG. 8b is a second structural schematic diagram of an AP according to an embodiment of the present disclosure;
FIG. 8c is a third structural schematic diagram of an AP according to an embodiment of the present disclosure;
FIG. 9 is a structural schematic diagram of a communication device according to an embodiment of the present disclosure; and
FIG. 10 is a structural schematic diagram of a chip according to an embodiment of the present disclosure.

### DETAILED DESCRIPTION

Embodiments of the present disclosure propose a communication method, an AP, and a storage medium.

In a first aspect, an embodiment of the present disclosure proposes a communication method. The method includes:
a first AP determining first parameter information; where the first parameter information is used by the first AP to determine whether to adjust first R-TWT information;
where the first R-TWT information is scheduled by the first AP.

In the above embodiment, the first AP can determine the first parameter information, so as to determine whether to adjust the first R-TWT scheduled by the first AP according to the first parameter information, which is beneficial for effective transmission of low-latency services.

In conjunction with some embodiments of the first aspect, in some embodiments, the first AP determining first parameter information includes at least one of:
the first AP receiving a first frame; where the first parameter information is carried in the first frame; the first parameter information includes second R-TWT information and one or more pieces of third R-TWT information, the second R-TWT information is scheduled by a second AP, and the one or more pieces of third R-TWT information are respectively scheduled by APs other than the second AP;
the first AP receiving a second frame; where the first parameter information is carried in the second frame; the first parameter information includes a first identification bit, the first identification bit is used to indicate whether scheduled members of fourth R-TWT information include a station (STA) device located in an overlapping basic service set (OBSS); where the fourth R-TWT information is scheduled by a third AP.

In the above embodiment, the first AP can determine the first parameter information through the first frame and/or the second frame, which can provide the first AP with multiple ways to determine the first parameter information. Moreover, the first parameter information carried in the first frame and the second frame is not the same, providing different adjustment bases for the first AP to determine whether to adjust the first R-TWT information, which is beneficial for the first AP to determine the first parameter information in different frame transmission and reception scenarios.

In conjunction with some embodiments of the first aspect, in some embodiments, the first parameter information includes the second R-TWT information and at least one piece of the third R-TWT information; the method further includes at least one of:
when at least one piece of R-TWT information among the second R-TWT information and the third R-TWT information has a service period overlapping with a service period of the first R-TWT information, and the first R-TWT information is adjustable, the first AP adjusting the first R-TWT information;
when no R-TWT information among the second R-TWT information and the third R-TWT information has a service period overlapping with the service period of the first R-TWT information, the first AP not adjusting the first R-TWT information;
when at least one piece of R-TWT information among the second R-TWT information and the third R-TWT information has a service period overlapping with the service period of the first R-TWT information, and the first R-TWT information is not adjustable, the first AP not adjusting the first R-TWT information.

In the above embodiment, the first AP can comprehensively determine whether to adjust the first R-TWT information based on whether the service period of the first R-TWT information is overlapped with the service period of other R-TWT information and whether the first R-TWT is adjustable, thereby improving the adjustment basis and adjustment mechanism for R-TWT information.

In conjunction with some embodiments of the first aspect, in some embodiments, the first frame includes a plurality of broadcast target wake time parameter set fields, and the plurality of broadcast TWT parameter set fields respectively comprise R-TWT information scheduled respectively by APs.

The carrying method of each piece of R-TWT information in the first frame can reuse the existing R-TWT information carrying method, which is beneficial for saving communication resources.

In conjunction with some embodiments of the first aspect, in some embodiments, each of the broadcast target wake time parameter set fields includes at least one of:
a first indication field, where the first indication field indicates, through a third value, that the R-TWT information included in the broadcast target wake time parameter set field is the second R-TWT information, and indicates, through a fourth value, that the R-TWT information included in the corresponding broadcast target wake time parameter set field is the third R-TWT information;
a second indication field, where the second indication field is used to indicate a basic service set (BSS) in which an AP scheduling the R-TWT information included in the broadcast target wake time parameter set field is located;
a second identification bit, where the second identification bit indicates, through a fifth value, that the R-TWT information included in the broadcast target wake time parameter set field is adjustable; and the second identification bit indicates, through a sixth value, that the R-TWT information included in the broadcast target wake time parameter set field is not adjustable.

In the above embodiment, the first frame can indicate, through the first indication field, the second indication field, and/or the second identification bit in each broadcast target wake time parameter set field, information such as the AP scheduling the R-TWT information, the BSS where the scheduling AP is located, and whether the R-TWT is adjustable, which is beneficial for the first AP to quickly determine relevant information of the received different R-TWT information and helps improve the efficiency of the first AP in determining whether to adjust the first R-TWT information.

In conjunction with some embodiments of the first aspect, in some embodiments, the first frame includes a target wake time element field, the target wake time element field includes a target wake time parameter information field, and the target wake time parameter information field includes the broadcast target wake time parameter set fields.

In the above embodiment, the first frame can reuse an existing frame format, which is beneficial for improving the determination and transmission efficiency of the first frame and saving signaling resources.

In conjunction with some embodiments of the first aspect, in some embodiments, each of the broadcast target wake time parameter set fields includes a request type field, the request type field includes a broadcast target wake time recommendation subfield, and the broadcast target wake time recommendation subfield includes the first indication field.

In the above embodiment, the first frame can reuse an information field of an existing frame format to include the first indication field, which is beneficial for improving the determination and transmission efficiency of the first frame and saving signaling resources.

In conjunction with some embodiments of the first aspect, in some embodiments, each of the broadcast target wake time parameter set fields includes a request type field, and the request type field includes the second identification bit.

In the above embodiment, the first frame can reuse an information field of an existing frame format to include the second identification bit, which is beneficial for improving the determination and transmission efficiency of the first frame and saving signaling resources.

In conjunction with some embodiments of the first aspect, in some embodiments, the first identification bit indicates, through a first value, that the scheduled members of the fourth R-TWT information include a STA device located in an OBSS;
the first identification bit indicates, through a second value, that the scheduled members of the fourth R-TWT information do not include a STA device located in an OBSS.

In the above embodiment, the first identification bit indicates, through different identification values, whether the scheduled members of the fourth R-TWT information include a STA device located in an OBSS, which is beneficial for the first AP to quickly determine whether the scheduled members of the fourth R-TWT information include a STA device located in an OBSS.

In conjunction with some embodiments of the first aspect, in some embodiments, the first parameter information carried in the second frame further includes a third indication field, where the third indication field is used to indicate a BSS that forms a first OBSS with a BSS in which the third AP is located, and the first OBSS includes the scheduled members of the fourth R-TWT information.

In the above embodiment, the second frame can also indicate, through the third indication field, a BSS that forms an OBSS with the BSS where the third AP is located and that includes the scheduled members of the fourth R-TWT, which is beneficial for the first AP to quickly determine whether to adjust the first R-TWT based on this.

In conjunction with some embodiments of the first aspect, in some embodiments, the first parameter information includes the first identification bit; the method further includes at least one of:
in a case where a first BSS and a second BSS do not form an OBSS, the first AP not adjusting the first R-TWT information; where the first BSS is a BSS in which the first AP is located, and the second BSS is a BSS in which the third AP is located;
in a case where a first BSS and a second BSS form a second OBSS, when the scheduled members of the fourth R-TWT information do not include a first STA device, the first AP not adjusting the first R-TWT information; where the first STA device is a STA device located in the second OBSS;
in a case where a first BSS and a second BSS form a second OBSS and the scheduled members of the fourth R-TWT information include the first STA device, when a service period of the first R-TWT information is overlapped with a service period of the fourth R-TWT information and the first R-TWT information is adjustable, the first AP adjusting the first R-TWT information;
in a case where a first BSS and a second BSS form a second OBSS and the scheduled members of the fourth R-TWT information include the first STA device, when a service period of the first R-TWT information is not overlapped with a service period of the fourth R-TWT information, and/or the first R-TWT information is not adjustable, the first AP not adjusting the first R-TWT information.

In the above embodiment, the first AP can comprehensively determine whether to adjust the first R-TWT information based on whether the BSS where the first AP is located and the BSS where the third AP is located form an OBSS, whether the scheduled members of the fourth R-TWT information include a STA device located in the OBSS formed by the BSS where the first AP is located and the BSS where the third AP is located, whether the first R-TWT information is adjustable, and other bases, thereby improving the adjustment basis and adjustment mechanism for R-TWT information.

In conjunction with some embodiments of the first aspect, in some embodiments, in a case where the first BSS and the second BSS form the second OBSS and the scheduled members of the fourth R-TWT information include the first STA device, the method further includes:
the first AP not transmitting a communication service within the service period of the fourth R-TWT information.

In the above embodiment, in a case where the first BSS and the second BSS form the second OBSS and the scheduled members of the fourth R-TWT information include the first STA device, the first AP does not transmit communication services within the service period of the fourth R-TWT information, which can effectively reduce interference with the low-latency service transmission process performed by the third AP within the fourth R-TWT information.

In conjunction with some embodiments of the first aspect, in some embodiments, the second frame further includes the fourth R-TWT information and one or more pieces of fifth R-TWT information, and the one or more pieces of fifth R-TWT information are respectively scheduled by APs other than the third AP.

In a second aspect, an embodiment of the present disclosure proposes a communication method. The method includes:
a second AP sending a first frame, where the first frame carries first parameter information, and the first parameter information is used by a first AP to determine whether to adjust first R-TWT information;
where the first R-TWT information is scheduled by the first AP;
where the first parameter information includes second R-TWT information and one or more pieces of third R-TWT information, the second R-TWT information is scheduled by the second AP, and the one or more pieces of third R-TWT information are respectively scheduled by APs other than the second AP.

In the above embodiment, the second AP can carry parameter information through the first frame, which can improve the sending method of the first parameter information and enable the first AP to determine whether to adjust the first R-TWT information based on the R-TWT information of other APs, which is beneficial for improving the relevant mechanism for R-TWT information adjustment.

In a third aspect, an embodiment of the present disclosure provides a communication method. The method includes:
a third AP sending a second frame, where the second frame carries first parameter information, and the first parameter information is used by a first AP to determine whether to adjust first R-TWT information;
where the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by the third AP.

In the above embodiment, the third AP can carry parameter information through the second frame, which can improve the sending method of the first parameter information, and enable the first AP to determine whether to adjust the first R-TWT information based on whether the scheduled members of other APs are located in an OBSS, which is beneficial for improving the relevant mechanism for R-TWT information adjustment.

In a fourth aspect, an embodiment of the present disclosure provides an AP. The AP includes:
a processing module, configured to determine first parameter information; where the first parameter information is used by a first AP to determine whether to adjust first R-TWT information;
where the first R-TWT information is scheduled by the first AP.

In a fifth aspect, an embodiment of the present disclosure provides an AP. The AP includes:
a transceiving module, configured to send a first frame, where the first frame carries first parameter information, and the first parameter information is used by a first AP to determine whether to adjust first R-TWT information;
where the first R-TWT information is scheduled by the first AP;
where the first parameter information includes second R-TWT information and one or more pieces of third R-TWT information, the second R-TWT information is scheduled by a second AP, and the one or more pieces of third R-TWT information are respectively scheduled by APs other than the second AP.

In a sixth aspect, an embodiment of the present disclosure provides an AP. The AP includes:
a transceiving module, configured to send a second frame, where the second frame carries first parameter information, and the first parameter information is used by a first AP to determine whether to adjust first R-TWT information;
where the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by a third AP.

In a seventh aspect, an embodiment of the present disclosure provides an AP. The AP includes one or more processors;
where the AP is configured to perform the communication method provided by the method described in the first aspect, the second aspect, the third aspect, and the optional implementations of the first aspect of the embodiments of the present disclosure.

In an eighth aspect, an embodiment of the present disclosure provides a communication system. The communication system includes a first AP, a second AP, and a third AP; where the first AP is configured to perform the method described in the first aspect and the optional implementations of the first aspect, the second AP is configured to perform the method described in the second aspect, and the third AP is configured to perform the method described in the third aspect.

In a ninth aspect, an embodiment of the present disclosure provides a storage medium. The storage medium stores instructions, where when the instructions run on a communication device, the communication device is caused to perform the method described in the first aspect, the second aspect, the third aspect, and the optional implementations of the first aspect.

In a tenth aspect, an embodiment of the present disclosure provides a program product. When the program product is executed by a communication device, the communication device is caused to perform the method described in the first aspect, the second aspect, the third aspect, and the optional implementations of the first aspect.

In an eleventh aspect, an embodiment of the present disclosure provides a computer program. When the computer program runs on a computer, the computer is caused to perform the method described in the first aspect, the second aspect, the third aspect, and the optional implementations of the first aspect.

In a twelfth aspect, an embodiment of the present disclosure provides a chip or chip system. The chip or chip system includes a processing circuit configured to perform the method described in the first aspect, the second aspect, the third aspect, and the optional implementations of the first aspect.

It can be understood that the above communication apparatus, AP, communication system, storage medium, program product, computer program, chip, or chip system are all used to perform the method proposed in the embodiments of the present disclosure. Therefore, the beneficial effects that can be achieved can refer to the beneficial effects in the corresponding method, which will not be repeated here.

The embodiments of the present disclosure propose a communication method, an AP, and a storage medium. In some embodiments, the communication method may be interchangeable with terms such as information processing method and communication method, the communication apparatus may be interchangeable with terms such as information processing apparatus, and the information processing system and communication system may be interchangeable.

The embodiments of the present disclosure are not exhaustive, but are merely illustrative of some embodiments and do not constitute specific limitations on the scope of protection of the present disclosure. In the absence of contradictions, each step in an embodiment can be implemented as an independent embodiment, and the steps can be combined arbitrarily. For example, a solution obtained by removing some steps in an embodiment can also be implemented as an independent embodiment, and the order of the steps in an embodiment can be arbitrarily exchanged. In addition, the optional implementations in an embodiment can be arbitrarily combined. Furthermore, the embodiments can be arbitrarily combined. For example, part or all of the steps of different embodiments can be arbitrarily combined, and an embodiment can be arbitrarily combined with optional implementations of other embodiments.

In the various embodiments of the present disclosure, unless otherwise specified and unless there is a logical conflict, the terms and/or descriptions between the embodiments are consistent and can be referenced to each other. The technical features in different embodiments can be combined to form new embodiments according to their inherent logical relationships.

The terms used in the embodiments of the present disclosure are for the purpose of describing particular embodiments only and are not intended to limit the present disclosure.

In the embodiments of the present disclosure, unless otherwise specified, elements expressed in the singular, such as "a", "an", "the", "said", "the above", "the foregoing", "this", etc., may mean "one and only one", or may mean "one or more", "at least one", etc. For example, when using articles such as "a", "an", "the", etc. in translation, the noun following the article can be understood as singular or plural expression.

In the embodiments of the present disclosure, "a plurality" means two or more.

In some embodiments, terms such as "at least one of", "one or more", "a plurality of', "multiple", etc. may be interchangeable.

In some embodiments, expressions such as "at least one of A and B", "A and/or B", "in one case A, in another case B", "in response to one case A, in response to another case B", etc., may include the following technical solutions depending on the circumstances: in some embodiments A (executing A regardless of B); in some embodiments B (executing B regardless of A); in some embodiments selecting execution from A and B (A and B are selectively executed); in some embodiments A and B (both A and B are executed). When there are more branches such as A, B, C, etc., it is similar to the above.

In some embodiments, expressions such as "A or B", etc., may include the following technical solutions depending on the circumstances: in some embodiments A (executing A regardless of B); in some embodiments B (executing B regardless of A); in some embodiments selecting execution from A and B (A and B are selectively executed). When there are more branches such as A, B, C, etc., it is similar to the above.

The prefix words such as "first", "second", etc. in the embodiments of the present disclosure are only used to distinguish different described objects and do not constitute limitations on the position, order, priority, quantity, or content of the described objects. The description of the objects refers to the description in the claims or the context of the embodiments, and should not constitute unnecessary limitations due to the use of prefix words. For example, if the described object is "field", the ordinal numbers before "field" in "first field" and "second field" do not limit the position or order between the "fields", and "first" and "second" do not limit whether the "fields" they modify are in the same message, nor do they limit the sequence of "first field" and "second field". For another example, if the described object is "level", the ordinal numbers before "level" in "first level" and "second level" do not limit the priority between the "levels". For another example, the quantity of the described object is not limited by the ordinal numbers and can be one or more. Taking "first device" as an example, the quantity of "device" can be one or more. In addition, objects modified by different prefix words can be the same or different. For example, if the described object is "device", "first device" and "second device" can be the same device or different devices, and their types can be the same or different. For another example, if the described object is "information", "first information" and "second information" can be the same information or different information, and their contents can be the same or different.

In some embodiments, "including A", "containing A", "used to indicate A", "carrying A" can be interpreted as directly carrying A, or can be interpreted as indirectly indicating A.

In some embodiments, terms such as "in response to...", "in response to determining...", "in the case of...", "when...", "if...", etc. may be interchangeable.

In some embodiments, terms such as "greater than", "greater than or equal to", "not less than", "more than", "more than or equal to", "not less than", "higher than", "higher than or equal to", "not lower than", "above", etc. may be interchangeable. Terms such as "less than", "less than or equal to", "not greater than", "less than", "less than or equal to", "not more than", "lower than", "lower than or equal to", "not higher than", "below", etc. may be interchangeable.

In some embodiments, obtaining data, information, etc. may comply with the laws and regulations of the country where it is located.

In some embodiments, data, information, etc. may be obtained after obtaining user consent.

In addition, each element, each row, or each column in the tables of the embodiments of the present disclosure can be implemented as an independent embodiment. Any combination of elements, rows, or columns can also be implemented as an independent embodiment.

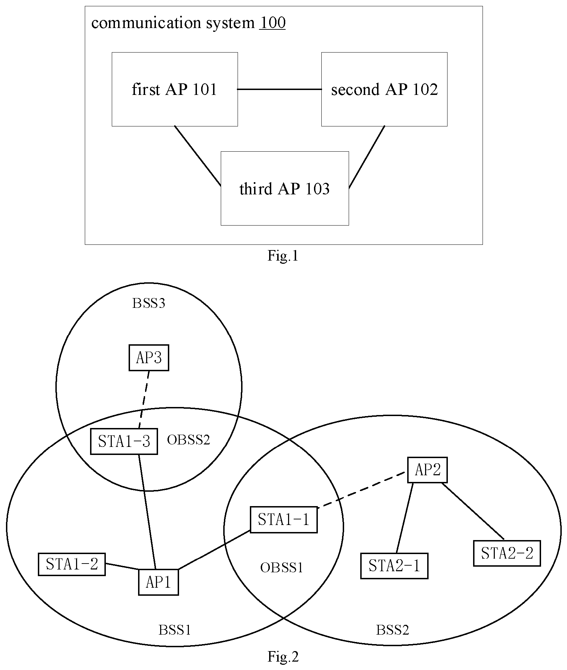

FIG. 1 is a schematic architectural diagram of a communication system according to an embodiment of the present disclosure.

As shown in FIG. 1, a communication system 100 includes a first access point (AP) 101, a second AP 102, and a third AP 103.

In some embodiments, the first AP 101, the second AP 102, and the third AP 103 may be access points for mobile terminals to enter a wired network. An AP is equivalent to a bridge connecting a wired network and a wireless network. Its main function is to connect various wireless network clients together and then connect the wireless network to an Ethernet. Specifically, the first AP 101, the second AP 102, and the third AP 103 may be terminal devices or network devices with a wireless fidelity chip. Optionally, the first AP 101, the second AP 102, and the third AP 103 may support multiple WLAN standards such as 802.11ax, 802.11be, 802.11ac, 802.11n, 802.11g, 802.11b, and 802.11a, as well as support the next-generation 802.11 protocol, but are not limited thereto.

Each AP can perform low-latency service transmission with associated STA devices within the service period of the scheduled R-TWT information.

In some embodiments, the STA device in the embodiments of the present disclosure may be a device including a wireless communication chip supporting WiFi communication function, a wireless sensor, or a wireless communication terminal. Optionally, the wireless communication terminal may be, for example, a mobile phone, a wearable device, an Internet of Things device supporting WiFi communication function, a car with WiFi communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, or at least one of the above, but is not limited thereto.

Specifically, the STA device may be a terminal device or network device with a wireless fidelity (WiFi) chip. Optionally, the STA device may support multiple WLAN standards such as 802.11ax, 802.11be, 802.11ac, 802.11n, 802.11g, 802.11b, and 802.11a, as well as support the next-generation 802.11 protocol, but is not limited thereto.

Optionally, in the embodiments of the present disclosure, the AP and the STA device may be devices supporting multi-link connections. For example, they can be respectively represented as an Access Point Multi-Link Device (AP MLD) and a Non-Access Point Multi-Link Device (Non-AP MLD). An AP MLD can represent an access point supporting multi-link communication function, and a non-AP MLD can represent a station supporting multi-link communication function.

It can be understood that the communication system described in the embodiments of the present disclosure is to illustrate the technical solutions of the embodiments of the present disclosure more clearly and does not constitute a limitation on the technical solutions proposed in the embodiments of the present disclosure. Those of ordinary skill in the art will appreciate that as system architectures evolve and new business scenarios emerge, the technical solutions proposed in the embodiments of the present disclosure are equally applicable to similar technical problems.

The following embodiments of the present disclosure may be applied to the communication system 100 shown in FIG. 1 or part of the entities, but are not limited thereto. The entities shown in FIG. 1 are illustrative. The communication system may include all or part of the entities in FIG. 1, and may also include other entities not shown in FIG. 1. The quantity and form of each entity are arbitrary. Each entity may be physical or virtual. The connection relationships between the entities are illustrative. The entities may not be connected or may be connected. The connection may be in any manner, may be direct or indirect, and may be wired or wireless.

The various embodiments of the present disclosure may be applied to a wireless local area network (WLAN), such as applicable to IEEE 802.11 system standards, for example, the 802.11a/b/g standard, the 802.11n standard, the 802.11ac standard, the 802.11ax standard, or the next generation thereof, for example, the 802.11be standard, also known as Wi-Fi 7 or the extremely high-throughput (EHT) standard, or standards of later generations. Alternatively, the various embodiments of the present disclosure may also be applicable to wireless local area network systems such as an Internet of Things (IoT) network or a Vehicle to Everything (V2X) network. Of course, the various embodiments of the present disclosure may also be applicable to other possible communication systems, for example, a Long Term Evolution (LTE) system, an LTE Frequency Division Duplex (FDD) system, an LTE Time Division Duplex (TDD) system, a Universal Mobile Telecommunications System (UMTS), a Worldwide Interoperability for Microwave Access (WiMAX) communication system, and a future fifth-generation (5G) communication system, etc.

In a WLAN, a Basic Service Set (BSS) is a basic component of a WLAN. A BSS network is composed of devices with certain associations within a specific coverage area. One scenario of association is that STA devices communicate directly with each other in an ad hoc network, which is called an Independent Basic Service Set (IBSS). Another more common scenario is that there is only one central site in the BSS network that is dedicated to managing the BSS, called an AP, and the BSS network includes at least one STA device associated with the AP.

To reduce device power consumption, the 802.11ax protocol proposed a Target Wake Time (TWT) energy-saving mechanism. Target Wake Time is used for APs and STA devices within a BSS to communicate within a specific service period through negotiation and remain dormant at other times to save device energy consumption. In order to ensure communication of low-latency services, 802.11be proposed a Restricted Target Wake Time (R-TWT) protocol, where within the R-TWT service period (SP), only communications identified as low-latency services are allowed, and other communication services are suspended or postponed within this phase.

In 802.11be, R-TWT is defined from the perspective of transmitting low-latency services within a single BSS. R-TWT provides a protection mechanism. STA devices in a single BSS suspend or terminate their transmission opportunities or other non-low-latency service transmissions before the SP corresponding to the joined R-TWT schedule to ensure effective transmission of low-latency services.

With the diversification of communication service requirements and the development trend of high-frequency bands, WLAN device deployment is becoming denser, and the phenomenon of overlapping basic service sets (OBSS) is becoming more common. Compared with 802.11be, UHR aims to improve tail latency and jitter, including OBSS scenarios. Since the existing R-TWT mechanism is based on a single BSS, only other stations within this BSS postpone or terminate non-latency services within the R-TWT SP to ensure transmission of low-latency services. However, in the scenario where scheduled members of R-TWT are located in an OBSS, when service periods of R-TWT information corresponding to multiple BSSs overlap, STA devices within the OBSS may be interfered by other APs when performing low-latency service transmission. As shown in FIG. 2, which is a schematic diagram of a network architecture according to an embodiment of the present disclosure. In FIG. 2, the basic service set of AP1 is BSS1, the basic service set of AP2 is BSS2, and the basic service set of AP3 is BSS3.

AP1 can establish associations and communicate with STA1-1, STA1-2, and STA1-3 within BSS1. AP2 can establish associations and communicate with STA2-1 and STA2-2 within BSS2. STA1-3 is located in OBSS2 formed by BSS1 and BSS3. STA1-1 is located in OBSS1 formed by BSS1 and BSS2. When STA1-1 communicates with AP1, it may be interfered by AP2. When STA1-3 communicates with AP1, it may be interfered by AP3.

On the other hand, only STA devices within a BSS know the R-TWT information scheduled by the associated AP. APs do not know the R-TWT information scheduled by other BSSs or neighboring APs. This leads to possible transmission overlap, collision, retransmission, hidden node problems, etc. in different BSSs, resulting in higher latency. Although R-TWT scheduling within a single BSS can improve low-latency service transmission efficiency and reliability, in future denser WLAN device deployment scenarios, the transmission efficiency of a single BSS will significantly decrease as low-latency service transmission occupies the medium in OBSS scenarios. Multiple APs can coordinate low-latency service transmission within multiple BSSs, especially low-latency service transmission of STA devices in OBSS scenarios, to improve low-latency service transmission efficiency.

In this regard, to improve the above R-TWT information coordination mechanism, the technical solutions in the embodiments of the present disclosure will be described clearly and completely below in conjunction with the drawings. Obviously, the described embodiments are only a part of the embodiments of the present disclosure, not all of them. Based on the embodiments of the present disclosure, all other embodiments obtained by those of ordinary skill in the art without creative work shall fall within the protection scope of the present disclosure.

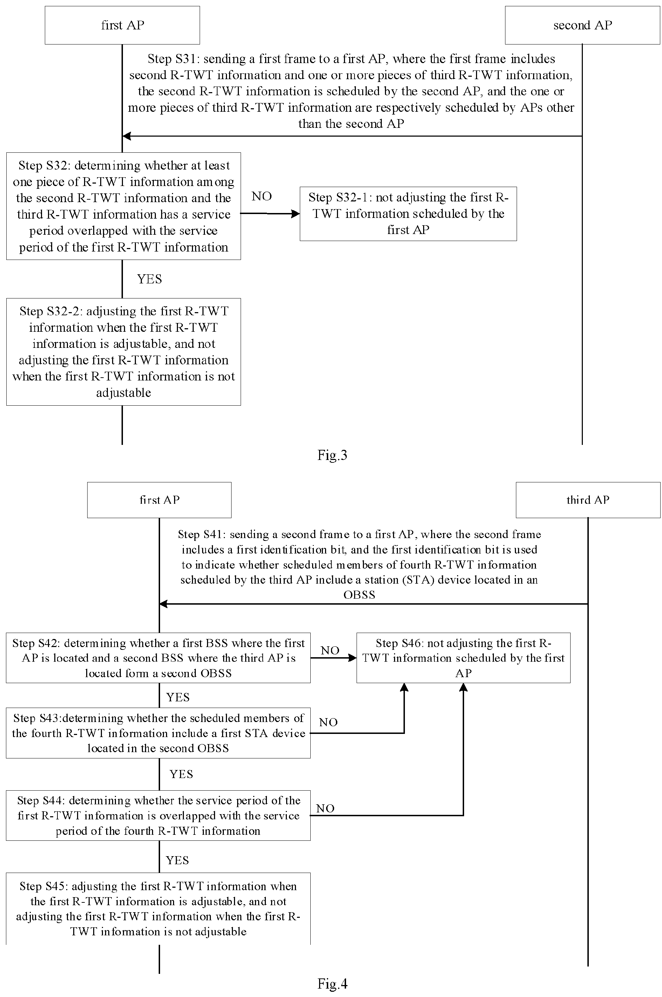

FIG. 3 is a first schematic interaction diagram of a communication method according to an embodiment of the present disclosure. As shown in FIG. 3, the method includes:

Step S31: a second AP sending a first frame to a first AP, where the first frame includes second R-TWT information and one or more pieces of third R-TWT information, the second R-TWT information is scheduled by the second AP, and the one or more pieces of third R-TWT information are respectively scheduled by APs other than the second AP.

In some embodiments, when the second AP sends the first frame to the first AP, it may carry first parameter information in the first frame. The first parameter information is used by the first AP to determine whether to adjust the first R-TWT information scheduled by the first AP.

The first parameter information includes second R-TWT information scheduled by the second AP and one or more pieces of third R-TWT information.

The one or more pieces of third R-TWT information are respectively scheduled by APs other than the second AP.

Each piece of the third R-TWT information is obtained by the second AP from other APs.

That is, the second AP sends the first frame, which includes the second R-TWT information and one or more pieces of third R-TWT information, for the first AP to determine whether to adjust the first R-TWT information scheduled by the first AP based on the second R-TWT information and the third R-TWT information.

In some embodiments, the first frame includes a plurality of broadcast TWT parameter set fields. Each broadcast TWT parameter set field includes the second R-TWT information or one piece of third R-TWT information.

That is, the first frame includes a plurality of broadcast TWT parameter set fields. One broadcast TWT parameter set field includes the second R-TWT information, and each of the other broadcast TWT parameter set fields includes one piece of third R-TWT information.

Optionally, the first frame includes a TWT parameter information field, and the TWT parameter information field includes a plurality of broadcast TWT parameter set fields.

Optionally, the first frame includes a TWT element field and a TWT parameter information field, and the TWT parameter information field includes a plurality of broadcast TWT parameter set fields.

In some embodiments, the first frame includes a plurality of broadcast TWT parameter set fields, and each broadcast TWT parameter set field includes the second R-TWT information or one piece of third R-TWT information.

Optionally, each broadcast TWT parameter set field may include a first indication field. The first indication field indicates, through a third value, that the R-TWT information included in the broadcast TWT parameter set field is the second R-TWT information, and indicates, through a fourth value, that the R-TWT information included in the corresponding broadcast TWT parameter set field is the third R-TWT information.

That is, for each broadcast TWT parameter set field, the first indication field of that broadcast TWT parameter set field indicates, through a third value, that the R-TWT information included in that broadcast TWT parameter set field is scheduled by the second AP, and indicates, through a fourth value, that the R-TWT information included in that broadcast TWT parameter set field is scheduled by a different AP other than the second AP, i.e., indicates that the R-TWT information included in that broadcast TWT parameter set field is not scheduled by the second AP.

The third value and the fourth value are different values. For example, the fourth value can be 5, and the third value can be 6, etc., which are not limited here.

Optionally, each broadcast TWT parameter set field includes a second indication field. The second indication field is used to indicate the basic service set (BSS) in which the AP scheduling the R-TWT information included in the broadcast TWT parameter set field is located.

The first indication field in each broadcast TWT parameter set field may include identification information (such as BSSID) of the BSS where the corresponding AP is located, to directly indicate the BSS in which the AP scheduling the R-TWT information included in that broadcast TWT parameter set field is located.

The first indication field in each broadcast TWT parameter set field may include information such as the MAC address or device identifier of the corresponding AP that can uniquely identify the AP, to indirectly indicate the BSS where the corresponding AP is located.

Optionally, each broadcast TWT parameter set field includes a second identification bit. The second identification bit indicates, through a fifth value, that the R-TWT information included in the broadcast TWT parameter set field is adjustable; the second identification bit indicates, through a sixth value, that the R-TWT information included in the broadcast TWT parameter set field is not adjustable.

For example, each broadcast TWT parameter set field includes a second identification bit. The second identification bit indicates, through a fifth value, that when the service period of the R-TWT information included in the broadcast TWT parameter set field is overlapped with the service period of other R-TWT information, the R-TWT information included in the broadcast TWT parameter set field is adjustable, and also indicates that when the service period of the R-TWT information included in the broadcast TWT parameter set field is overlapped with the service period of other R-TWT information, the other R-TWT information whose service period overlaps takes precedence. The second identification bit indicates, through a sixth value, that regardless of whether the service period of the R-TWT information included in the broadcast TWT parameter set field is overlapped with the service period of other R-TWT information, the R-TWT information included in the broadcast TWT parameter set field is always not adjustable.

Specifically, the second identification bit of each broadcast TWT parameter set field may indicate, through a fifth value, that the R-TWT information included in the broadcast TWT parameter set field respects other R-TWT information whose service period is overlapped with it, to further indicate that when the service period of the R-TWT information included in the broadcast TWT parameter set field is overlapped with the service period of other R-TWT information, the R-TWT information included in the broadcast TWT parameter set field is adjustable (changeable).

Specifically, the second identification bit of each broadcast TWT parameter set field may indicate, through a fifth value, that the R-TWT information included in the broadcast TWT parameter set field does not respect other R-TWT information whose service period is overlapped with it, to further indicate that when the service period of the R-TWT information included in the broadcast TWT parameter set field is overlapped with the service period of other R-TWT information, the R-TWT information included in the broadcast TWT parameter set field is not adjustable (not changeable).

The fifth value and the sixth value are different. For example, the fifth value can be 1, and the sixth value can be 0, which are not limited here.

Optionally, each broadcast TWT parameter set field in the first frame may only include one of the first indication field, the second indication field, or the second identification bit, or may include any one or more of the first indication field, the second indication field, or the second identification bit, which is not limited here.

For example, for each broadcast TWT parameter set field of the first frame, that broadcast TWT parameter set field includes a first indication field. When the identification value of the first indication field is the fourth value, that broadcast TWT parameter set field includes a second indication field, used to indicate the BSS in which the AP scheduling the R-TWT information of that broadcast target wake time is located.

That is, for each broadcast TWT parameter set field of the first frame, that broadcast TWT parameter set field includes a first indication field. When the first indication field indicates that the R-TWT information included in that broadcast TWT parameter set field is scheduled by a different AP other than the second AP, that broadcast TWT parameter set field further includes a second indication field, used to indicate the BSS in which the AP scheduling the R-TWT information of that broadcast target wake time is located.

Each broadcast TWT parameter set field includes a second identification bit. The second identification bit indicates, through a fifth value, that the R-TWT information included in the broadcast TWT parameter set field is adjustable; the second identification bit indicates, through a sixth value, that the R-TWT information included in the broadcast TWT parameter set field is not adjustable.

In some embodiments, the first frame includes a plurality of broadcast TWT parameter set fields. Each broadcast TWT parameter set field includes a request type field. The request type field includes a broadcast TWT recommendation subfield, and the broadcast TWT recommendation subfield includes the first indication field.

Optionally, the first indication field may be the broadcast TWT recommendation subfield.

Optionally, the first indication field may be one or more bits of the broadcast TWT recommendation subfield.

In some embodiments, the first frame includes a plurality of broadcast TWT parameter set fields. Each broadcast TWT parameter set field includes a request type field, and the request type field includes the second identification bit.

Optionally, the second identification bit may be any information field in the request type field, or may be at least one bit of the request type field.

In some embodiments, the first frame includes a plurality of broadcast TWT parameter set fields. Each broadcast TWT parameter set field includes a second indication field.

Optionally, the second indication field may be any information field in the broadcast TWT parameter set field, or may be at least one bit of the request type field.

Step S32: the first AP determining whether at least one piece of R-TWT information among the second R-TWT information and the third R-TWT information has a service period overlapped with the service period of the first R-TWT information.

In some embodiments, the first AP determines whether at least one piece of R-TWT information among the second R-TWT information and the third R-TWT information has a service period overlapped with the service period of the first R-TWT information.

If no R-TWT information among the second R-TWT information and the third R-TWT information has a service period overlapped with the service period of the first R-TWT information, the first AP performs step S32-1. If at least one piece of R-TWT information among the second R-TWT information and the third R-TWT information has a service period overlapped with the service period of the first R-TWT information, the first AP performs step S32-2.

Step S32-1: the first AP not adjusting the first R-TWT information scheduled by the first AP.

When the first AP determines that no R-TWT information among the second R-TWT information and the third R-TWT information has a service period overlapped with the service period of the first R-TWT information, it indicates that when the first AP transmits low-latency services within the service period of the first R-TWT information, it will not interfere with the low-latency service transmission processes of other APs. In this case, the first AP may not adjust the first R-TWT information.

Step S32-2: adjusting the first R-TWT information when the first R-TWT information is adjustable, and not adjusting the first R-TWT information when the first R-TWT information is not adjustable.

When the first AP determines that at least one piece of R-TWT information among the second R-TWT information and the third R-TWT information has a service period overlapped with the service period of the first R-TWT information, it indicates that when the first AP transmits low-latency services within the service period of the first R-TWT information, it may interfere with the low-latency service transmission processes of other APs.

In this case, when the first R-TWT information is adjustable, the first AP may adjust the first R-TWT information. When the first R-TWT information is not adjustable, the first AP does not adjust the first R-TWT information.

When the first R-TWT information is adjustable, the first AP adjusts the first R-TWT information by adopting one or more methods such as shortening or extending the service period, changing the start time or end time of the service period, shortening or extending the service period, etc., to obtain adjusted R-TWT information.

The first AP can perform low-latency service transmission within the service period of the adjusted R-TWT information.

The service period of the adjusted R-TWT information is not overlapped with the service period of the second R-TWT information, nor is it overlapped with the service period of the third R-TWT information.

The communication method involved in this embodiment of the present disclosure may include at least one of the foregoing steps and embodiments. For example, any one of step S31 or step S32 (including steps S32-1 and S32-2) can be implemented as an independent embodiment, and steps S31 to S32 (including steps S32-1 and S32-2) can be implemented as an independent embodiment, but are not limited thereto.

FIG. 4 is a second schematic interaction diagram of a communication method according to an embodiment of the present disclosure. As shown in FIG. 4, the method includes:

Step S41: a third AP sending a second frame to a first AP, where the second frame includes a first identification bit, and the first identification bit is used to indicate whether scheduled members of fourth R-TWT information scheduled by the third AP include a station (STA) device located in an OBSS.

In some embodiments, when the third AP sends the second frame to the first AP, it may carry first parameter information in the second frame. The first parameter information is used by the first AP to determine whether to adjust the first R-TWT information scheduled by the first AP.

The first parameter information includes a first identification bit, and the first identification bit is used to indicate whether scheduled members of fourth R-TWT information include a station (STA) device located in an overlapping basic service set (OBSS).

The fourth R-TWT information is scheduled by the third AP.

That is, the third AP sends the second frame, and the second frame includes a first identification bit. The first identification bit is used to indicate whether scheduled members of fourth R-TWT information include a station (STA) device located in an OBSS.

The first identification bit indicates, through a first value, that the scheduled members of the fourth R-TWT information include a STA device located in an OBSS, and indicates, through a second value, that the scheduled members of the fourth R-TWT information do not include a STA device located in an OBSS.

The first value and the second value are different. For example, the first value can be 1, and the second value can be 0, which are not limited here.

Optionally, the second frame includes fourth R-TWT information of the third AP and one or more pieces of fifth R-TWT information. The fourth R-TWT information is scheduled by the third AP, and the one or more pieces of fifth R-TWT information are respectively scheduled by APs other than the third AP.

The fourth R-TWT information and the fifth R-TWT information may belong to the first parameter information carried in the second frame.

The second frame includes a plurality of broadcast TWT parameter set fields. Each broadcast TWT parameter set field includes the fourth R-TWT information or one piece of fifth R-TWT information.

Optionally, the second frame includes a TWT parameter information field, and the TWT parameter information field includes a plurality of broadcast TWT parameter set fields.

Optionally, the first frame includes a TWT element field and a TWT parameter information field, and the TWT parameter information field includes a plurality of broadcast TWT parameter set fields.

Optionally, the broadcast TWT parameter set field including the fourth R-TWT information includes a broadcast TWT info field. The broadcast TWT info field includes the first identification bit, which indicates, through a first value, that the scheduled members of the fourth R-TWT information include a STA device located in an OBSS, and indicates, through a second value, that the scheduled members of the fourth R-TWT information do not include a STA device located in an OBSS.

Optionally, the broadcast TWT parameter set field including the fourth R-TWT information includes a broadcast TWT info field. The broadcast TWT info field includes the first identification bit, which indicates, through a first value, that the scheduled members of the fourth R-TWT information include a STA device located in an OBSS, and indicates, through a second value, that the scheduled members of the fourth R-TWT information do not include a STA device located in an OBSS.

In some embodiments, the third AP may receive at least one third message frame sent by at least one fourth AP. Each third message frame sent by a fourth AP includes R-TWT information scheduled by that corresponding fourth AP and R-TWT information of other APs other than that corresponding fourth AP.

For each third message frame, that third message frame includes a plurality of broadcast TWT parameter set fields. Each broadcast TWT parameter set field includes at least one of:
a fourth indication field indicates, through a third value, that the R-TWT information included in the broadcast TWT parameter set field is the second R-TWT information scheduled by the corresponding fourth AP, and indicates, through a fourth value, that the R-TWT information included in the corresponding broadcast TWT parameter set field is R-TWT information scheduled by other APs;
a fifth indication field, where the fifth indication field is used to indicate a basic service set (BSS) in which an AP scheduling the R-TWT information included in the broadcast TWT parameter set field is located;
a third identification bit, where the third identification bit indicates, through a fifth value, that the R-TWT information included in the broadcast TWT parameter set field is adjustable; and the third identification bit indicates, through a sixth value, that the R-TWT information included in the broadcast TWT parameter set field is not adjustable.

Other optional implementations related to the fourth indication field can be referred to the relevant description of the aforementioned first indication field. Other optional implementations related to the fifth indication field can be referred to the relevant description of the aforementioned second indication field. Other optional implementations related to the third identification bit can be referred to the relevant description of the aforementioned second identification bit, which will not be repeated here.

The third AP may determine, based on the content of each received third frame, whether the BSS corresponding to each piece of R-TWT information received by the third AP forms a first OBSS with the BSS where the third AP is located. If the BSS corresponding to a received piece of R-TWT information and the BSS where the third AP is located form a first OBSS, the third AP further determines whether the first OBSS includes scheduled members of the fourth R-TWT information scheduled by the third AP, i.e., determines whether the scheduled members of the fourth R-TWT information include a STA device located in the first OBSS.

In a case where the BSS corresponding to a received piece of R-TWT information and the BSS where the third AP is located form a first OBSS, the third AP may send a second frame. The second frame indicates, through the first identification bit, whether the scheduled members of the fourth R-TWT information scheduled by the third AP include a STA device located in an OBSS.

In some embodiments, the first parameter information carried in the second frame further includes a third indication field. The third indication field is used to indicate a BSS that forms a first OBSS with the BSS where the third AP is located, and the first OBSS includes the scheduled members of the fourth R-TWT information.

As an example, if the BSS where AP1 is located and the BSS where the third AP is located form an OBSS, and the formed OBSS includes STA devices scheduled by the fourth R-TWT information, the third indication field is used to indicate the BSS where AP1 is located.

Optionally, the second frame includes a plurality of broadcast TWT parameter set fields. The broadcast TWT parameter set field including the fourth R-TWT information includes a broadcast TWT info field. The broadcast TWT info field includes the third indication field, which is used to indicate a BSS that forms a first OBSS with the BSS where the third AP is located, and the first OBSS includes the scheduled members of the fourth R-TWT information.

The third indication field may include identification information (such as BSSID) of the BSS that forms the first OBSS with the BSS where the third AP is located, to directly indicate the BSS that forms the first OBSS with the BSS where the third AP is located.

The third indication field may include information such as the MAC address or device identifier of the AP corresponding to the BSS that forms the first OBSS with the BSS where the third AP is located, which can uniquely identify the AP, to indirectly indicate the BSS that forms the first OBSS with the BSS where the third AP is located.

Step S42: the first AP determining whether a first BSS where the first AP is located and a second BSS where the third AP is located form a second OBSS.

In some embodiments, the first AP may determine, based on the first parameter information, whether the BSS where the first AP is located and the BSS where the third AP is located form a second OBSS.

If the first AP determines that the first BSS and the second BSS do not form a second OBSS, it indicates that when the first AP performs low-latency service transmission within the service period of the first R-TWT information, it will not interfere with the low-latency service transmission process performed by the third AP within the service period of the fourth R-TWT information.

In this case, the first AP performs step S46, i.e., the first AP does not adjust the first R-TWT information.

If the first AP determines that the first BSS and the second BSS form a second OBSS, it indicates that when the first AP performs low-latency service transmission within the service period of the first R-TWT information, it may interfere with the low-latency service transmission process performed by the third AP within the service period of the fourth R-TWT information.

In this case, the first AP may determine whether to adjust the first R-TWT information based on whether the scheduled members of the fourth R-TWT information include a first STA device located in the second OBSS.

The first STA device is a STA device located in the second OBSS.

The fourth R-TWT information is scheduled by the third AP.

Step S43: the first AP determines whether the scheduled members of the fourth R-TWT information include a first STA device located in the second OBSS.

In some embodiments, if the first AP determines that the scheduled members of the fourth R-TWT information do not include a first STA device located in the second OBSS, it indicates that when the first AP performs low-latency service transmission within the service period of the first R-TWT information, it will not interfere with the low-latency service transmission process performed by the third AP within the service period of the fourth R-TWT information.

In this case, the first AP performs step S46, i.e., the first AP does not adjust the first R-TWT information.

The first STA device is a STA device located in the second OBSS.

The fourth R-TWT information is scheduled by the third AP.

If the first AP determines that the scheduled members of the fourth R-TWT information include a first STA device located in the second OBSS, it indicates that when the first AP performs low-latency service transmission within the service period of the first R-TWT information or performs communication service transmission at other times, it may interfere with the low-latency service transmission process performed by the third AP with the first STA device within the service period of the fourth R-TWT information.

In this case, the first AP may determine whether to adjust the first R-TWT information based on whether the service period of the first R-TWT information is overlapped with the service period of the fourth R-TWT information. Moreover, the first AP does not transmit communication services within the service period of the fourth R-TWT information, to avoid that when the first AP performs communication service transmission within the service period of the fourth R-TWT information, it interferes with the low-latency service transmission process performed by the third AP with the first STA device within the service period of the fourth R-TWT information.

Step S44: the first AP determining whether the service period of the first R-TWT information is overlapped with the service period of the fourth R-TWT information.

In some embodiments, if the first AP determines that the service period of the first R-TWT information is not overlapped with the service period of the fourth R-TWT information, it indicates that the first R-TWT information does not require adjustment.

In this case, the first AP performs step S46, i.e., the first AP does not adjust the first R-TWT information.

If the first AP determines that the service period of the first R-TWT information is overlapped with the service period of the fourth R-TWT information, it may determine whether to adjust the first R-TWT information based on whether the first R-TWT information is adjustable.

Step S45: the first AP adjusting the first R-TWT information when the first R-TWT information is adjustable, and not adjusting the first R-TWT information when the first R-TWT information is not adjustable.

In some embodiments, the first AP adjusts the first R-TWT information when the first R-TWT information is adjustable, and does not adjust the first R-TWT information when the first R-TWT information is not adjustable.

When the first R-TWT information is adjustable, the first AP may adjust the first R-TWT information by adopting one or more methods such as shortening or extending the service period, changing the start time or end time of the service period, shortening or extending the service period, etc., to obtain adjusted R-TWT information.

The first AP can perform low-latency service transmission within the service period of the adjusted R-TWT information.

The service period of the adjusted R-TWT information is not overlapped with the service period of the fourth R-TWT information.

Step S46: the first AP not adjusting the first R-TWT information scheduled by the first AP.

The communication method involved in this embodiment of the present disclosure may include at least one of the foregoing steps and embodiments. For example, step S41 or steps S42-S46 can be implemented as an independent embodiment, and steps S41-S46 can be implemented as an independent embodiment, but are not limited thereto.

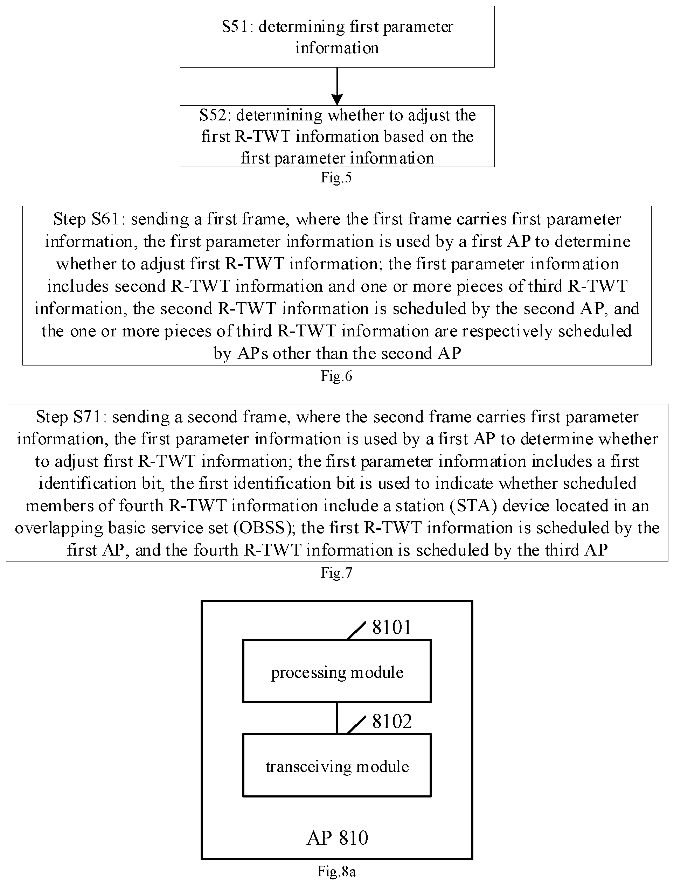

FIG. 5 is a schematic flowchart of a communication method performed by a first AP according to an embodiment of the present disclosure. As shown in FIG. 5, the method includes:
Step S51: a first AP determining first parameter information.

In some embodiments, the first AP may determine the first parameter information by receiving a first frame and/or receiving a second frame.

The first parameter information is used by the first AP to determine whether to adjust the first R-TWT information scheduled by the first AP.

Relevant explanations regarding the first frame and the first parameter information carried therein can be referred to the implementation shown in step S31 in FIG. 3, which will not be repeated here.

Relevant explanations regarding the second frame and the first parameter information carried therein can be referred to the implementation shown in step S41 in FIG. 4, which will not be repeated here.

Step S52: the first AP determining whether to adjust the first R-TWT information based on the first parameter information.

In some embodiments, when the first parameter information is carried in the first frame, the process of the first AP determining whether to adjust the first R-TWT information can be referred to the implementation shown in step S32 (including steps S32-1 and S32-2) in FIG. 3, which will not be repeated here.

In some embodiments, when the first parameter information is carried in the second frame, the process of the first AP determining whether to adjust the first R-TWT information can be referred to the implementation shown in steps S42 to S46 in FIG. 4, which will not be repeated here.

FIG. 6 is a schematic flowchart of a communication method performed by a second AP according to an embodiment of the present disclosure. As shown in FIG. 6, the method includes:

Step S61: sending a first frame, where the first frame carries first parameter information, the first parameter information is used by a first AP to determine whether to adjust first R-TWT information; the first parameter information includes second R-TWT information and one or more pieces of third R-TWT information, the second R-TWT information is scheduled by the second AP, and the one or more pieces of third R-TWT information are respectively scheduled by APs other than the second AP.

In some embodiments, when the second AP sends the first frame to the first AP, it may carry first parameter information in the first frame. The first parameter information is used by the first AP to determine whether to adjust the first R-TWT information scheduled by the first AP.

The first parameter information includes second R-TWT information scheduled by the second AP and one or more pieces of third R-TWT information.

The one or more pieces of third R-TWT information are respectively scheduled by APs other than the second AP.

Each piece of the third R-TWT information is obtained by the second AP from other APs.

That is, the second AP sends the first frame, which includes the second R-TWT information and one or more pieces of third R-TWT information, for the first AP to determine whether to adjust the first R-TWT information scheduled by the first AP based on the second R-TWT information and the third R-TWT information.

In some embodiments, the first frame includes a plurality of broadcast TWT parameter set fields. Each broadcast TWT parameter set field includes the second R-TWT information or one piece of third R-TWT information.

That is, the first frame includes a plurality of broadcast TWT parameter set fields. One broadcast TWT parameter set field includes the second R-TWT information, and each of the other broadcast TWT parameter set fields includes one piece of third R-TWT information.

Optionally, the first frame includes a TWT parameter information field, and the TWT parameter information field includes a plurality of broadcast TWT parameter set fields.

Optionally, the first frame includes a TWT element field and a TWT parameter information field, and the TWT parameter information field includes a plurality of broadcast TWT parameter set fields.

In some embodiments, the first frame includes a plurality of broadcast TWT parameter set fields, and each broadcast TWT parameter set field includes the second R-TWT information or one piece of third R-TWT information.

Optionally, each broadcast TWT parameter set field may include a first indication field. The first indication field indicates, through a third value, that the R-TWT information included in the broadcast TWT parameter set field is the second R-TWT information, and indicates, through a fourth value, that the R-TWT information included in the corresponding broadcast TWT parameter set field is the third R-TWT information.

That is, for each broadcast TWT parameter set field, the first indication field of that broadcast TWT parameter set field indicates, through a third value, that the R-TWT information included in that broadcast TWT parameter set field is scheduled by the second AP, and indicates, through a fourth value, that the R-TWT information included in that broadcast TWT parameter set field is scheduled by a different AP other than the second AP, i.e., indicates that the R-TWT information included in that broadcast TWT parameter set field is not scheduled by the second AP.

The third value and the fourth value are different values. For example, the fourth value can be 5, and the third value can be 6, etc., which are not limited here.

Optionally, each broadcast TWT parameter set field includes a second indication field. The second indication field is used to indicate the basic service set (BSS) in which the AP scheduling the R-TWT information included in the broadcast TWT parameter set field is located.

The first indication field in each broadcast TWT parameter set field may include identification information (such as BSSID) of the BSS where the corresponding AP is located, to directly indicate the BSS in which the AP scheduling the R-TWT information included in that broadcast TWT parameter set field is located.

The first indication field in each broadcast TWT parameter set field may include information such as the MAC address or device identifier of the corresponding AP that can uniquely identify the AP, to indirectly indicate the BSS where the corresponding AP is located.

Optionally, each broadcast TWT parameter set field includes a second identification bit. The second identification bit indicates, through a fifth value, that the R-TWT information included in the broadcast TWT parameter set field is adjustable; the second identification bit indicates, through a sixth value, that the R-TWT information included in the broadcast TWT parameter set field is not adjustable.

For example, each broadcast TWT parameter set field includes a second identification bit. The second identification bit indicates, through a fifth value, that when the service period of the R-TWT information included in the broadcast TWT parameter set field is overlapped with the service period of other R-TWT information, the R-TWT information included in the broadcast TWT parameter set field is adjustable, and also indicates that when the service period of the R-TWT information included in the broadcast TWT parameter set field is overlapped with the service period of other R-TWT information, the other R-TWT information whose service period overlaps takes precedence. The second identification bit indicates, through a sixth value, that regardless of whether the service period of the R-TWT information included in the broadcast TWT parameter set field is overlapped with the service period of other R-TWT information, the R-TWT information included in the broadcast TWT parameter set field is always not adjustable.

Specifically, the second identification bit of each broadcast TWT parameter set field may indicate, through a fifth value, that the R-TWT information included in the broadcast TWT parameter set field respects other R-TWT information whose service period is overlapped with it, to further indicate that when the service period of the R-TWT information included in the broadcast TWT parameter set field is overlapped with the service period of other R-TWT information, the R-TWT information included in the broadcast TWT parameter set field is adjustable (changeable).

Specifically, the second identification bit of each broadcast TWT parameter set field may indicate, through a fifth value, that the R-TWT information included in the broadcast TWT parameter set field does not respect other R-TWT information whose service period is overlapped with it, to further indicate that when the service period of the R-TWT information included in the broadcast TWT parameter set field is overlapped with the service period of other R-TWT information, the R-TWT information included in the broadcast TWT parameter set field is not adjustable (not changeable).

The fifth value and the sixth value are different. For example, the fifth value can be 1, and the sixth value can be 0, which are not limited here.

Optionally, each broadcast TWT parameter set field in the first frame may only include one of the first indication field, the second indication field, or the second identification bit, or may include any one or more of the first indication field, the second indication field, or the second identification bit, which is not limited here.

For example, for each broadcast TWT parameter set field of the first frame, that broadcast TWT parameter set field includes a first indication field. When the identification value of the first indication field is the fourth value, that broadcast TWT parameter set field includes a second indication field, used to indicate the BSS in which the AP scheduling the R-TWT information of that broadcast target wake time is located.

That is, for each broadcast TWT parameter set field of the first frame, that broadcast TWT parameter set field includes a first indication field. When the first indication field indicates that the R-TWT information included in that broadcast TWT parameter set field is scheduled by a different AP other than the second AP, that broadcast TWT parameter set field further includes a second indication field, used to indicate the BSS in which the AP scheduling the R-TWT information of that broadcast target wake time is located.

Each broadcast TWT parameter set field includes a second identification bit. The second identification bit indicates, through a fifth value, that the R-TWT information included in the broadcast TWT parameter set field is adjustable; the second identification bit indicates, through a sixth value, that the R-TWT information included in the broadcast TWT parameter set field is not adjustable.

In some embodiments, the first frame includes a plurality of broadcast TWT parameter set fields. Each broadcast TWT parameter set field includes a request type field. The request type field includes a broadcast TWT recommendation subfield, and the broadcast TWT recommendation subfield includes the first indication field.

Optionally, the first indication field may be the broadcast TWT recommendation subfield.

Optionally, the first indication field may be one or more bits of the broadcast TWT recommendation subfield.

In some embodiments, the first frame includes a plurality of broadcast TWT parameter set fields. Each broadcast TWT parameter set field includes a request type field, and the request type field includes the second identification bit.

Optionally, the second identification bit may be any information field in the request type field, or may be at least one bit of the request type field.

In some embodiments, the first frame includes a plurality of broadcast TWT parameter set fields. Each broadcast TWT parameter set field includes a second indication field.

Optionally, the second indication field may be any information field in the broadcast TWT parameter set field, or may be at least one bit of the request type field.

FIG. 7 is a schematic flowchart of a communication method performed by a third AP according to an embodiment of the present disclosure. As shown in FIG. 7, the method includes:

Step S71: sending a second frame, where the second frame carries first parameter information, the first parameter information is used by a first AP to determine whether to adjust first R-TWT information; the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by the third AP.

In some embodiments, when the third AP sends the second frame to the first AP, it may carry first parameter information in the second frame. The first parameter information is used by the first AP to determine whether to adjust the first R-TWT information scheduled by the first AP.

The first parameter information includes a first identification bit, and the first identification bit is used to indicate whether scheduled members of fourth R-TWT information include a station (STA) device located in an overlapping basic service set (OBSS).

The fourth R-TWT information is scheduled by the third AP.

That is, the third AP sends the second frame, and the second frame includes a first identification bit. The first identification bit is used to indicate whether scheduled members of fourth R-TWT information include a station (STA) device located in an OBSS.

The first identification bit indicates, through a first value, that the scheduled members of the fourth R-TWT information include a STA device located in an OBSS, and indicates, through a second value, that the scheduled members of the fourth R-TWT information do not include a STA device located in an OBSS.

The first value and the second value are different. For example, the first value can be 1, and the second value can be 0, which are not limited here.

Optionally, the second frame includes fourth R-TWT information of the third AP and one or more pieces of fifth R-TWT information. The fourth R-TWT information is scheduled by the third AP, and the one or more pieces of fifth R-TWT information are respectively scheduled by APs other than the third AP.

The fourth R-TWT information and the fifth R-TWT information may belong to the first parameter information carried in the second frame.

The second frame includes a plurality of broadcast TWT parameter set fields. Each broadcast TWT parameter set field includes the fourth R-TWT information or one piece of fifth R-TWT information.

Optionally, the second frame includes a TWT parameter information field, and the TWT parameter information field includes a plurality of broadcast TWT parameter set fields.

Optionally, the first frame includes a TWT element field and a TWT parameter information field, and the TWT parameter information field includes a plurality of broadcast TWT parameter set fields.

Optionally, the broadcast TWT parameter set field including the fourth R-TWT information includes a broadcast TWT info field. The broadcast TWT info field includes the first identification bit, which indicates, through a first value, that the scheduled members of the fourth R-TWT information include a STA device located in an OBSS, and indicates, through a second value, that the scheduled members of the fourth R-TWT information do not include a STA device located in an OBSS.

Optionally, the broadcast TWT parameter set field including the fourth R-TWT information includes a broadcast TWT info field. The broadcast TWT info field includes the first identification bit, which indicates, through a first value, that the scheduled members of the fourth R-TWT information include a STA device located in an OBSS, and indicates, through a second value, that the scheduled members of the fourth R-TWT information do not include a STA device located in an OBSS.

In some embodiments, the third AP may receive at least one third message frame sent by at least one fourth AP. Each third message frame sent by a fourth AP includes R-TWT information scheduled by that corresponding fourth AP and R-TWT information of other APs other than that corresponding fourth AP.

For each third message frame, that third message frame includes a plurality of broadcast TWT parameter set fields. Each broadcast TWT parameter set field includes at least one of:
a fourth indication field indicates, through a third value, that the R-TWT information included in the broadcast TWT parameter set field is the second R-TWT information scheduled by the corresponding fourth AP, and indicates, through a fourth value, that the R-TWT information included in the corresponding broadcast TWT parameter set field is R-TWT information scheduled by other APs;
a fifth indication field, where the fifth indication field is used to indicate a basic service set (BSS) in which an AP scheduling the R-TWT information included in the broadcast TWT parameter set field is located;
a third identification bit, where the third identification bit indicates, through a fifth value, that the R-TWT information included in the broadcast TWT parameter set field is adjustable; and the third identification bit indicates, through a sixth value, that the R-TWT information included in the broadcast TWT parameter set field is not adjustable.

Other optional implementations related to the fourth indication field can be referred to the relevant description of the aforementioned first indication field. Other optional implementations related to the fifth indication field can be referred to the relevant description of the aforementioned second indication field. Other optional implementations related to the third identification bit can be referred to the relevant description of the aforementioned second identification bit, which will not be repeated here.

The third AP may determine, based on the content of each received third frame, whether the BSS corresponding to each piece of R-TWT information received by the third AP forms a first OBSS with the BSS where the third AP is located. If the BSS corresponding to a received piece of R-TWT information and the BSS where the third AP is located form a first OBSS, the third AP further determines whether the first OBSS includes scheduled members of the fourth R-TWT information scheduled by the third AP, i.e., determines whether the scheduled members of the fourth R-TWT information include a STA device located in the first OBSS.

In a case where the BSS corresponding to a received piece of R-TWT information and the BSS where the third AP is located form a first OBSS, the third AP may send a second frame. The second frame indicates, through the first identification bit, whether the scheduled members of the fourth R-TWT information scheduled by the third AP include a STA device located in an OBSS.

In some embodiments, the first parameter information carried in the second frame further includes a third indication field. The third indication field is used to indicate a BSS that forms a first OBSS with the BSS where the third AP is located, and the first OBSS includes the scheduled members of the fourth R-TWT information.

As an example, if the BSS where AP1 is located and the BSS where the third AP is located form an OBSS, and the formed OBSS includes STA devices scheduled by the fourth R-TWT information, the third indication field is used to indicate the BSS where AP1 is located.

Optionally, the second frame includes a plurality of broadcast TWT parameter set fields. The broadcast TWT parameter set field including the fourth R-TWT information includes a broadcast TWT info field. The broadcast TWT info field includes the third indication field, which is used to indicate a BSS that forms a first OBSS with the BSS where the third AP is located, and the first OBSS includes the scheduled members of the fourth R-TWT information.

The third indication field may include identification information (such as BSSID) of the BSS that forms the first OBSS with the BSS where the third AP is located, to directly indicate the BSS that forms the first OBSS with the BSS where the third AP is located.

The third indication field may include information such as the MAC address or device identifier of the AP corresponding to the BSS that forms the first OBSS with the BSS where the third AP is located, which can uniquely identify the AP, to indirectly indicate the BSS that forms the first OBSS with the BSS where the third AP is located.

FIG. 8a is a first structural schematic diagram of an AP according to an embodiment of the present disclosure. As shown in FIG. 8a, an AP 810 may include at least one of: a processing module 8101, a transceiving module 8102, etc.

In some embodiments, the processing module 8101 is configured to: determine first parameter information; where the first parameter information is used by a first AP to determine whether to adjust first R-TWT information; where the first R-TWT information is scheduled by the first AP.

Optionally, the processing module 8101 is configured to perform at least one of the steps performed by the first AP in any of the above methods (for example, step S32, step S32-1, step S32-2, steps S42-S46, step S52, but not limited thereto), which will not be repeated here. The transceiving module 8102 is configured to perform at least one of the communication steps performed by the first AP in any of the above methods (for example, step S51, but not limited thereto), which will not be repeated here.

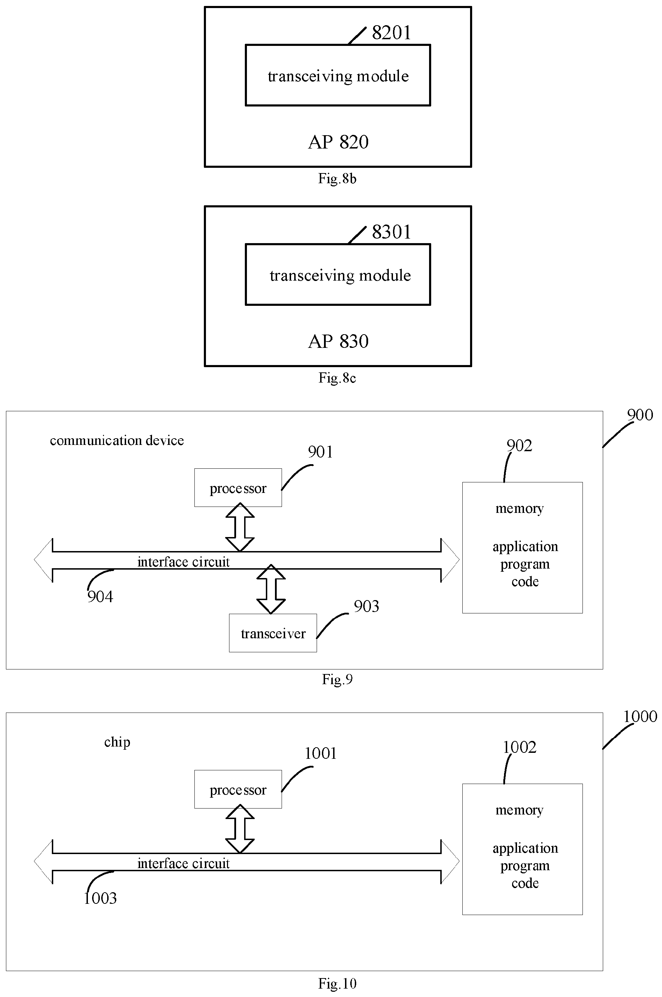

FIG. 8b is a second structural schematic diagram of an AP according to an embodiment of the present disclosure. As shown in FIG. 8b, an AP 820 may include at least one of: a transceiving module 8201, etc.

In some embodiments, the transceiving module 8202 is configured to send a first frame, where the first frame carries first parameter information, the first parameter information is used by a first AP to determine whether to adjust first R-TWT information; where the first R-TWT information is scheduled by the first AP; where the first parameter information includes second R-TWT information and one or more pieces of third R-TWT information, the second R-TWT information is scheduled by a second AP, and the one or more pieces of third R-TWT information are respectively scheduled by APs other than the second AP.

Optionally, the transceiving module 8202 is configured to perform at least one of the communication steps performed by the second AP in any of the above methods (for example, step S31, step S61, but not limited thereto), which will not be repeated here.

FIG. 8c is a third structural schematic diagram of an AP according to an embodiment of the present disclosure. As shown in FIG. 8c, an AP 830 may include at least one of: a transceiving module 8301, etc.

In some embodiments, the transceiving module 8301 is configured to send a second frame, where the second frame carries first parameter information, the first parameter information is used by a first AP to determine whether to adjust first R-TWT information; where the first parameter information includes a first identification bit, the first identification bit is used to indicate whether scheduled members of fourth R-TWT information include a station (STA) device located in an overlapping basic service set (OBSS); the first R-TWT information is scheduled by the first AP, and the fourth R-TWT information is scheduled by a third AP.

Optionally, the transceiving module 8301 is configured to perform at least one of the communication steps performed by the third AP in any of the above methods (for example, step S41, step S71, but not limited thereto), which will not be repeated here.

It should be understood that the division of the above units or modules is only a division of logical functions, and in actual implementation, they may be fully or partially integrated into one physical entity, or may be physically separate. In addition, the units or modules may be implemented in the form of software invoked by a processor: for example, including a processor, where the processor is connected to a memory, instructions are stored in the memory, and the processor invokes the instructions stored in the memory to implement any of the above methods or to implement the functions of the above units or modules, where the processor may be a general-purpose processor, such as a Central Processing Unit (CPU) or a microprocessor, and the memory may be a memory inside or outside the device. Alternatively, the units or modules in the device may be implemented in the form of hardware circuits, and the functions of some or all of the units or modules may be implemented by designing the hardware circuits. The hardware circuit may be understood as one or more processors. For example, in one implementation, the hardware circuit is an application-specific integrated circuit (ASIC), and the functions of some or all of the units or modules are implemented by designing the logical relationships of the components in the circuit. For another example, in another implementation, the hardware circuit may be implemented by a programmable logic device (PLD). Taking a Field Programmable Gate Array (FPGA) as an example, it may include a large number of logic gate circuits, and the connection relationships between the logic gate circuits are configured through configuration files to implement the functions of some or all of the units or modules. All units or modules of the above apparatus may be implemented entirely in the form of software invoked by a processor, or entirely in the form of hardware circuits, or partially in the form of software invoked by a processor and the remaining part in the form of hardware circuits.

In the embodiments of the present disclosure, a processor is a circuit with signal processing capability. In one implementation, the processor may be a circuit with instruction reading and running capability, such as a Central Processing Unit (CPU), a microprocessor, a Graphics Processing Unit (GPU) (which can be understood as a microprocessor), or a Digital Signal Processor (DSP), etc. In another implementation, the processor may implement certain functions through the logical relationships of hardware circuits. The logical relationships of the hardware circuits may be fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading configuration documents to implement hardware circuit configuration can be understood as the process of the processor loading instructions to implement the functions of some or all of the units or modules mentioned above. In addition, it may also be a hardware circuit designed for artificial intelligence, which can be understood as an ASIC, such as a Neural Network Processing Unit (NPU), a Tensor Processing Unit (TPU), a Deep learning Processing Unit (DPU), etc.

FIG. 9 is a structural schematic diagram of a communication device according to an embodiment of the present disclosure. The communication device 900 may be a first AP, a second AP, or a third AP, or may be a chip, chip system, or processor that supports the first AP, second AP, or third AP to implement any of the above methods. The communication device may be used to implement the method described in the above method embodiments. For details, refer to the description in the above method embodiments.

As shown in FIG. 9, the communication device 900 includes one or more processors 901. The processor 901 may be a general-purpose processor or a special-purpose processor, such as a baseband processor or a central processing unit. The baseband processor may be used to process communication protocols and communication data. The central processing unit may be used to control the communication device (such as a base station, baseband chip, terminal device, terminal device chip, DU, or CU, etc.), execute programs, and process program data. The communication device 900 is used to perform any of the above methods.

In some embodiments, the communication device 900 further includes one or more memories 902 for storing instructions. Optionally, all or part of the memories 902 may also be located outside the communication device 900.

In some embodiments, the communication device 900 further includes one or more transceivers 903. When the communication device 900 includes one or more transceivers 903, the transceiver 903 performs at least one of the communication steps such as sending and/or receiving in the above method (for example, step S31, step S41, step S51, step S61, step S71, but not limited thereto), and the processor 901 performs at least one of other steps (for example, step S32, step S32-1, step S32-2, steps S42-S46, step S52, etc., but not limited thereto).

In some embodiments, the transceiver may include a receiver and/or a transmitter. The receiver and the transmitter may be separate or integrated together. Optionally, terms such as transceiver, transceiver unit, transceiver, transceiver circuit, etc. may be interchangeable. Terms such as transmitter, transmitter unit, transmitter, transmitter circuit, etc. may be interchangeable. Terms such as receiver, receiver unit, receiver, receiver circuit, etc. may be interchangeable.

In some embodiments, the communication device 900 may include one or more interface circuits 904. Optionally, the interface circuit 904 is connected to the memory 902. The interface circuit 904 may be used to receive signals from the memory 902 or other devices, and may be used to send signals to the memory 902 or other devices. For example, the interface circuit 904 may read instructions stored in the memory 902 and send the instructions to the processor 901.

The communication device 900 described in the above embodiments may be a first AP, a second AP, or a third AP, but the scope of the communication device 900 described in the present disclosure is not limited thereto. The structure of the communication device 900 is not limited by FIG. 9. The communication device may be an independent device or may be part of a larger device. For example, the communication device may be: 1) an independent integrated circuit (IC), or chip, or chip system or subsystem; 2) a set of one or more ICs, optionally, the set of ICs may also include storage components for storing data and programs; 3) an ASIC, such as a modem (Modem); 4) a module that can be embedded in other devices; 5) a receiver, terminal device, smart terminal device, cellular phone, wireless device, handset, mobile unit, vehicle-mounted device, network device, cloud device, artificial intelligence device, etc.; 6) others, etc.

FIG. 10 is a structural schematic diagram of a chip 1000 according to an embodiment of the present disclosure. The chip 1000 includes one or more processors 1001. The chip 1000 is used to perform any of the above methods.

In some embodiments, the chip 1000 further includes one or more interface circuits 1003. Optionally, the interface circuit 1003 is connected to the memory 1002. The interface circuit 1003 may be used to receive signals from the memory 1002 or other devices, and the interface circuit 1003 may be used to send signals to the memory 1002 or other devices. For example, the interface circuit 1003 may read instructions stored in the memory 1002 and send the instructions to the processor 1001.

In some embodiments, the interface circuit 1003 performs at least one of the communication steps such as sending and/or receiving in the above method (for example, step S31, step S41, step S51, step S61, step S71, but not limited thereto), and the processor 1001 performs at least one of other steps (for example, step S32, step S32-1, step S32-2, steps S42-S46, step S52, etc., but not limited thereto).

In some embodiments, terms such as interface circuit, interface, transceiver pin, transceiver, etc. may be interchangeable.

In some embodiments, the chip 1000 further includes one or more memories 1002 for storing instructions. Optionally, all or part of the memory 1002 may be located outside the chip 1000.

The present disclosure also proposes a storage medium. The storage medium stores instructions. When the instructions run on the communication device 900, the communication device 900 is caused to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure further provides a program product. When the program product is executed by the communication device 900, the communication device 900 is caused to perform any of the above methods. Optionally, the program product is a computer program product.

The present disclosure also proposes a computer program. When the computer program runs on a computer, the computer is caused to perform any of the above methods. The above description is only the preferred embodiments of the present disclosure and an explanation of the applied technical principles. Those skilled in the art should understand that the scope of the present disclosure involved in the present disclosure is not limited to the technical solutions formed by the specific combination of the above technical features, but should also cover other technical solutions formed by any combination of the above technical features or their equivalent features without departing from the above disclosed concept. For example, the above features are replaced with technical features (but not limited to) disclosed in the present disclosure that have similar functions to form other technical solutions.

## Claims

1. A communication method, comprising:
determining, by a first access point (AP), first parameter information, wherein the first parameter information is used by the first AP to determine whether to adjust first restricted target wake time (R-TWT) information;
wherein the first R-TWT information is scheduled by the first AP.

2. The method according to claim 1, wherein determining by the first AP the first parameter information comprises at least one of:
receiving, by the first AP, a first frame, wherein the first parameter information is carried in the first frame, the first parameter information comprises second R-TWT information and one or more pieces of third R-TWT information, the second R-TWT information is scheduled by a second AP, and the one or more pieces of third R-TWT information are respectively scheduled by APs other than the second AP; or
receiving, by the first AP, a second frame, wherein the first parameter information is carried in the second frame, the first parameter information comprises a first identification bit, the first identification bit is used to indicate whether scheduled members of fourth R-TWT information comprise a station (STA) device in an overlapping basic service set (OBSS), and the fourth R-TWT information is scheduled by a third AP.

3. The method according to claim 2, wherein the first parameter information comprises the second R-TWT information and the one or more pieces of third R-TWT information, and the method further comprises at least one of:
adjusting the first R-TWT information by the first AP in a case where at least one piece of the second R-TWT information and the one or more pieces of third R-TWT information has a service period overlapped with a service period of the first R-TWT information and the first R-TWT information is adjustable;
not adjusting the first R-TWT information by the first AP in a case where neither the second R-TWT information nor the one or more pieces of third R-TWT information has a service period overlapped with a service period of the first R-TWT information; or
not adjusting the first R-TWT information by the first AP in a case where at least one piece of the second R-TWT information and the one or more pieces of third R-TWT information has a service period overlapped with a service period of the first R-TWT information and the first R-TWT information is not adjustable.

4. The method according to claim 2, wherein the first frame comprises a plurality of broadcast TWT parameter set fields, and the plurality of broadcast TWT parameter set fields respectively comprise R-TWT information scheduled respectively by APs.

5. The method according to claim 4, wherein a broadcast TWT parameter set field among the plurality of broadcast TWT parameter set fields comprises at least one of:
a first indication field, wherein the first indication field is used to indicate, through a third value, that the R-TWT information comprised in the broadcast TWT parameter set field is the second R-TWT information, and indicate, through a fourth value, that the R-TWT information comprised in the broadcast TWT parameter set field is the third R-TWT information;
a second indication field, wherein the second indication field is used to indicate a basic service set (BSS) in which an AP scheduling the R-TWT information comprised in the broadcast TWT parameter set field is located; or
a second identification bit, wherein the second identification bit is used to indicate, through a fifth value, that the R-TWT information comprised in the broadcast TWT parameter set field is adjustable, and indicate, through a sixth value, that the R-TWT information comprised in the broadcast TWT parameter set field is not adjustable.

6. The method according to claim 4, wherein the first frame comprises a TWT element field, the TWT element field comprises a TWT parameter information field, and the TWT parameter information field comprises the plurality of broadcast TWT parameter set fields.

7. The method according to claim 5, wherein the broadcast TWT parameter set field comprises a request type field, the request type field comprises a broadcast TWT recommendation subfield, and the broadcast TWT recommendation subfield comprises the first indication field.

8. The method according to claim 5, wherein the broadcast TWT parameter set field comprises a request type field, and the request type field comprises the second identification bit.

9. The method according to claim 2, wherein
the first identification bit is used to indicate, through a first value, that the scheduled members of the fourth R-TWT information comprise the STA device in the OBSS;
the first identification bit is used to indicate, through a second value, that the scheduled members of the fourth R-TWT information do not comprise the STA device in the OBSS.

10. The method according to claim 2, wherein the first parameter information carried in the second frame further comprises a third indication field, the third indication field is used to indicate a BSS that forms a first OBSS with a BSS in which the third AP is located, and the first OBSS comprises the scheduled members of the fourth R-TWT information.

11. The method according to claim 2, wherein the first parameter information comprises the first identification bit, and the method further comprises at least one of:
not adjusting the first R-TWT information by the first AP in a case where a first BSS and a second BSS do not form the OBSS, wherein the first BSS is a BSS in which the first AP is located, and the second BSS is a BSS in which the third AP is located;
not adjusting the first R-TWT information by the first AP in a case where a first BSS and a second BSS form a second OBSS and the scheduled members of the fourth R-TWT information do not comprise a first STA device, wherein the first STA device is a STA device in the second OBSS;
adjusting the first R-TWT information by the first AP in a case where a first BSS and a second BSS form the second OBSS, the scheduled members of the fourth R-TWT information comprise the first STA device, a service period of the first R-TWT information is overlapped with a service period of the fourth R-TWT information, and the first R-TWT information is adjustable; or
not adjusting the first R-TWT information by the first AP in a case where a first BSS and a second BSS form the second OBSS, the scheduled members of the fourth R-TWT information comprise the first STA device, a service period of the first R-TWT information is not overlapped with a service period of the fourth R-TWT information, and/or the first R-TWT information is not adjustable.

12. The method according to claim 11, wherein in a case where the first BSS and the second BSS form the second OBSS and the scheduled members of the fourth R-TWT information comprise the first STA device, the method further comprises:
not transmitting a communication service by the first AP within the service period of the fourth R-TWT information.

13. The method according to claim 2, wherein the second frame further comprises the fourth R-TWT information and one or more pieces of fifth R-TWT information, and the one or more pieces of fifth R-TWT information are respectively scheduled by APs other than the third AP.

14. A communication method, comprising:
sending, by a second access point (AP), a first frame, wherein the first frame carries first parameter information, and the first parameter information is used by a first AP to determine whether to adjust first restricted target wake time (R-TWT) information;
wherein the first R-TWT information is scheduled by the first AP;
wherein the first parameter information comprises second R-TWT information and one or more pieces of third R-TWT information, the second R-TWT information is scheduled by the second AP, and the one or more pieces of third R-TWT information are respectively scheduled by APs other than the second AP.

15. A communication method, comprising:
sending, by a third access point (AP), a second frame, wherein the second frame carries first parameter information, and the first parameter information is used by a first AP to determine whether to adjust first restricted target wake time (R-TWT) information;
wherein the first parameter information comprises a first identification bit, the first identification bit is used to indicate whether scheduled members of fourth R-TWT information comprise a station (STA) device in an overlapping basic service set (OBSS), the first R-TWT information is scheduled by the first AP, and the fourth R-TWT information is scheduled by the third AP.

16. An access point (AP), comprising:
a processing module configured to determine first parameter information, wherein the first parameter information is used by a first AP to determine whether to adjust first restricted target wake time (R-TWT) information;
wherein the first R-TWT information is scheduled by the first AP.

17. An access point (AP), comprising:
a transceiving module configured to send a first frame, wherein the first frame carries first parameter information, and the first parameter information is used by a first AP to determine whether to adjust first restricted target wake time (R-TWT) information;
wherein the first R-TWT information is scheduled by the first AP;
wherein the first parameter information comprises second R-TWT information and one or more pieces of third R-TWT information, the second R-TWT information is scheduled by a second AP, and the one or more pieces of third R-TWT information are respectively scheduled by APs other than the second AP.

18. An access point (AP), comprising:
a transceiving module configured to send a second frame, wherein the second frame carries first parameter information, and the first parameter information is used by a first AP to determine whether to adjust first restricted target wake time (R-TWT) information;
wherein the first parameter information comprises a first identification bit, the first identification bit is used to indicate whether scheduled members of fourth R-TWT information comprise a station (STA) device in an overlapping basic service set (OBSS), the first R-TWT information is scheduled by the first AP, and the fourth R-TWT information is scheduled by a third AP.

19. An access point (AP), comprising:
one or more processors;
wherein the AP is configured to perform the communication method according to any one of claims 1 to 15.

20. An access point (AP), comprising:
one or more processors;
wherein the AP is configured to perform the communication method according to any one of claims 1 to 15.

21. A communication system, comprising a first access point (AP), a second AP, and a third AP, wherein the first AP is configured to implement the communication method according to any one of claims 1 to 13, the second AP is configured to implement the communication method according to claim 14, and the third AP is configured to implement the communication method according to claim 15.

22. A storage medium, having stored instructions that, when running on a communication device, cause the communication device to perform the communication method according to any one of claims 1 to 15.
